# EUROPEAN PATENT APPLICATION

(11) **EP 4 782 133 A1**
(43) Date of publication of application: **29.07.2026**
(21) Application number: 25172457.1
(22) Date of filing: 24.04.2025
(51) Int. Cl.: B23D 47/12, B28D 1/04, B28D 7/02

(54) **INTERNAL GEAR RING CUTTING MACHINE**

(30) Priority: 23.01.2025 CN 202510105571
(71) Applicant: ZheJiang TOPWE Tools Manufacturing Co., Ltd, Jinhua Zhejiang 321300 (CN)
(72) Inventor: XU, Wumin, Jinhua 321300 (CN)
(74) Representative: Bayramoglu et al.

(57) **Abstract**

The present invention discloses an internal gear (102) ring cutting machine. A saw blade (100) is annular and includes an external gear (101) arranged on an outer edge and an internal gear (102) arranged on an inner edge, and the external gear (101) is configured for cutting; a drive gear (200), where the internal gear (102) is meshed with the drive gear (200); a transmission assembly (300), where the transmission assembly (300) includes a transmission shaft (301) and a first bevel gear (302), and the drive gear (200) and the first bevel gear (302) are fixedly arranged at two ends of the transmission shaft (301), respectively; an output assembly (400), including an output shaft (401) and a second bevel gear (402) that are fixedly connected, where the first bevel gear (302) and the second bevel gear (402) are meshed with each other for transmission. The advantages of the present invention are as follows: first, by setting a transmission mode in which the internal gear (102) is meshed with the drive gear (200), the original hard friction transmission mode is replaced, thereby improving the transmission performance of the saw blade (100) and overcoming the defect of being prone to slippage; second, the gear (200, 101, 102, 302, 402) transmission mode makes a side press wheel (500) fixed, and no adjustment is required after the saw blade (100) is replaced, thereby reducing the difficulty of replacing and adjusting the saw blade (100) and the press wheels (500), and achieving convenience and efficiency.

## Description

### TECHNICAL FIELD

The present invention relates to the technical field of cutting machines, and in particular to an internal gear ring cutting machine.

### BACKGROUND TECHNOLOGY

The electric handheld cutting machine is suitable for building decoration and stone processing, and is used for cutting and grooving non-metallic brittle materials containing silicates, such as terrazzo, marble, granite, glass and cement board. It has the advantages of high cutting efficiency, good processing quality, easy use and low labor intensity. It is one of the most commonly used cutting tools among electric tools, and the user needs to hold it with both hands. At present, the electric handheld cutting machine adopts a hard friction mode between the saw blade and the guide wheel. With an increase in the number of times used and duration of usage, the saw blade and the guide wheel will wear, and the contact position of the saw blade and the guide wheel needs to be constantly adjusted, resulting in such defects as low transmission performance between the guide wheel and the saw blade, being prone to slippage, fast wear, and cumbersome replacement and adjustment of the saw blade.

### CONTENT OF THE INVENTION

An objective of the present invention is to provide a cutting machine with an internal gear transmission mode in order to overcome the shortcomings of the prior art.

In order to solve the above technical problems, the present invention provides the following technical solutions: an internal gear ring cutting machine includes: a saw blade, where the saw blade is annular and includes an external gear arranged on an outer edge and an internal gear arranged on an inner edge, and the external gear is configured for cutting; a drive gear, where the internal gear is meshed with the drive gear; a transmission assembly, where the transmission assembly includes a transmission shaft and a first bevel gear, and the drive gear and the first bevel gear are fixedly arranged at two ends of the transmission shaft, respectively; an output assembly, including an output shaft and a second bevel gear that are fixedly connected, where the first bevel gear and the second bevel gear are meshed with each other for transmission.

Preferably, tracks configured to be annular grooves are provided along two ring sides of the saw blade.

Preferably, the internal gear ring cutting machine includes press wheels, where a surface of the press wheel is provided with protrusions; two press wheels as a group are fixedly arranged on two sides of the saw blade; and the protrusions are pressed into the tracks to roll.

Preferably, the internal gear ring cutting machine includes a water baffling component arranged at a side edge of the saw blade, where the water baffling component includes an upper water baffling plate and a lower water baffling plate that are allowed to flip.

Preferably, the internal gear ring cutting machine includes a water outlet component, where the water outlet component further includes a water outlet and a water outlet pipe that are connected to each other; and the water outlet is arranged on a side of the saw blade and is located below the transmission assembly.

Preferably, the internal gear ring cutting machine includes a water guide component, where the water guide component includes a water guide plate and a partition; the water guide plate and the partition are attached to each other and arranged within a ring of the saw blade; and a cut-out portion of the water guide plate extending inward along an edge is attached to the partition to cooperatively form a flow guide portion.

Preferably, the internal gear ring cutting machine further includes a housing, a handheld portion and a handle.

Preferably, the tracks are two concentric tracks arranged on a side of the saw blade.

Preferably, the protrusions are two annular strip protrusions arranged at an interval, and have an interval distance corresponding to an interval distance of the two tracks, and the two protrusions roll in the two tracks, respectively.

Preferably, two groups of press wheels are located above and below the drive gear, respectively.

The advantages of the present invention are as follows: first, by setting a transmission mode in which the internal gear is meshed with the drive gear, the original hard friction transmission mode is replaced, thereby improving the transmission performance of the saw blade and overcoming the defect of being prone to slippage; second, the gear transmission mode makes a side press wheel fixed, and no adjustment is required after the saw blade is replaced, thereby reducing the difficulty of replacing and adjusting the saw blade and the press wheels, and achieving convenience and efficiency.

### DESCRIPTION OF THE DRAWINGS

FIG. 1 is a schematic diagram of a drive gear of an internal gear ring cutting machine according to the present invention;
FIG. 2 is a schematic diagram of a transmission assembly and an output assembly according to the present invention;
FIG. 3 is a schematic diagram of a partition according to the present invention;
FIG. 4 is a schematic diagram of a water guide plate according to the present invention;
FIG. 5 is a structural schematic diagram of the prior cutting machine with a hard friction mode according to the present invention; and
FIG. 6 is a structural schematic diagram of the prior cutting machine with the hard friction mode according to the present invention from another perspective.

### SPECIFIC IMPLEMENTATIONS

In order to make the objective, technical solutions and advantages of the embodiments of the present invention clearer, the technical solutions in the embodiments of the present invention will be described clearly and completely below in combination with the drawings in the embodiments of the present invention. The described embodiments are part of the embodiments of the present invention, not all the embodiments.

### Embodiment 1

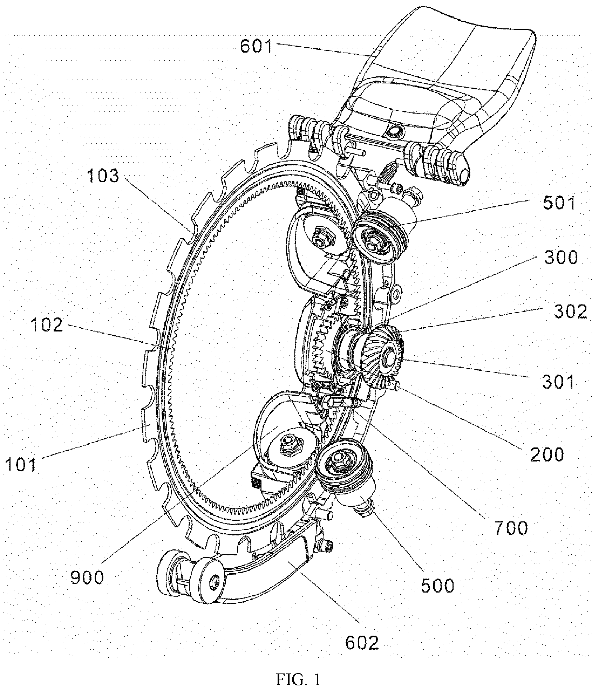

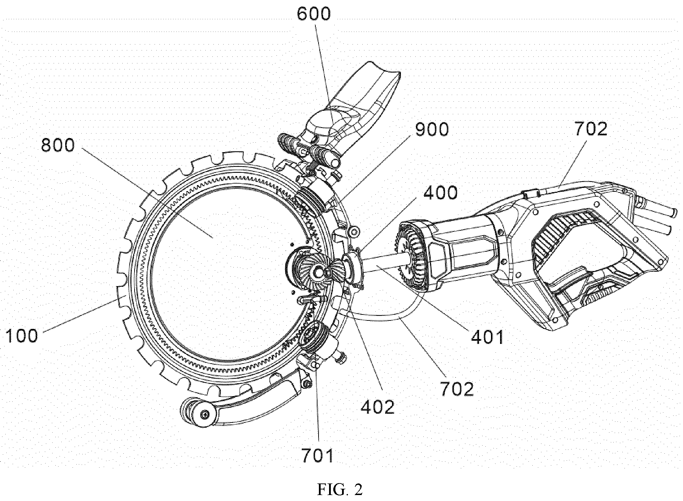

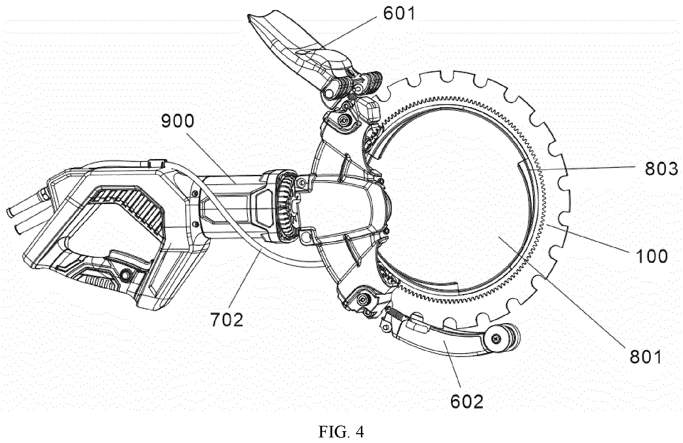

Referring to FIGS. 1-4, in order to overcome the defects of the prior cutting machine using a hard friction mode between a saw blade and a guide wheel, which results in that low transmission performance and fast wear of the guide wheel and the saw blade and cumbersome replacement and adjustment of the saw blade, an internal gear ring cutting machine is proposed in the present embodiment, and the inner ring of the saw blade 100 is made into an internal gear, which is meshed with and driven by the small gear to perform cutting and severing works. Since the gear has the characteristics of high transmission performance, non-slip, allowable lubrication, and easy production and manufacturing, the machine use performance and processing technology are greatly improved. In addition, due to the design of the gear, a side guide wheel of the gear is fixed, and no adjustment is required after the saw blade 100 is replaced, which reduces the difficulty of replacement and adjusting the saw blade 100 by adjusting the side guide wheel. The saw blade 100 can be a diamond saw blade, a carbide saw blade and the like, and the cutting and severing objects are such as metal, stone, concrete, wood or others.

Therefore, in the present embodiment, the internal gear ring cutting machine is proposed, including the saw blade 100, the drive gear 200, the transmission assembly 300 and the output assembly 400. The saw blade 100 rotates for cutting operation. The drive gear 200 is drivingly connected to the saw blade 100 to drive the rotation of the saw blade 100. Two ends of the transmission assembly 300 are respectively connected to the drive gear 200 and the output assembly 400 to transmit the rotation output of the output assembly 400 to the drive gear 200, thereby achieving the rotation of the saw blade 100.

Furthermore, the saw blade 100 is annular and includes the external gear 101 arranged on the outer edge and the internal gear 102 arranged on the inner edge. The external gear 101 is configured for cutting operation. The internal gear 102 is meshed with the drive gear 200, and the drive gear 200 rotates to drive the saw blade 100 to rotate. Moreover, the internal gear 102 and the drive gear 200 are in straight tooth engagement.

The transmission assembly 300 includes the transmission shaft 301 and the first bevel gear 302. The drive gear 200 and the first bevel gear 302 are fixedly arranged at two ends of the transmission shaft 301, respectively, and the three are fixed and rotate synchronously. The output assembly 400 includes the output shaft 401 and the second bevel gear 402 that are fixedly connected. The first bevel gear 302 and the second bevel gear 402 are meshed with each other for transmission. It should be noted that the first bevel gear 302 and the second bevel gear 402 are both in the vertical direction, have opposite spiral tooth directions and present a 90° angle in the vertical direction. The output shaft 401 is the rotating shaft of the motor. The rotation torque of the motor is transmitted to the saw blade 100 through the transmission assembly 300 to achieve the rotational cutting operation.

In order to achieve stable rotation of the saw blade 100, in the present embodiment, the tracks 103 configured to be the annular grooves and the press wheels 500 configured to tightly press the saw blade 100 are provided along two ring sides of the saw blade 100. The surface of the press wheel 500 is provided with the protrusions 501. The two press wheels 500 as a group are fixedly arranged on the two sides of the saw blade 100, and the protrusions 501 are pressed into the tracks 103 to roll. It should be noted that the press wheels 500 of the present embodiment are fixedly arranged, and the protrusions 501 on the two sides are pressed into the tracks 103 to limit the saw blade 100, so as to prevent the accuracy of the cutting operation from being affected due to the unstable shaking of the saw blade 100 during the rotation process. As the press wheels 500 roll, the protrusions 501 continuously roll and limit in the tracks 103.

As a preferred solution of the present embodiment, the tracks 103 are two concentric tracks arranged on the side of the saw blade 100. An additional track 103 is added to improve the limiting stability of the saw blade 100. At the same time, if there are too many tracks 103, the strength of the saw blade 100 will be affected, affecting the service life.

To cooperate with the two tracks 103, the protrusions 501 in the present embodiment are two annular strip protrusions arranged at an interval, and have an interval distance corresponding to an interval distance of the two tracks 103. The two protrusions 501 roll in the two tracks 103, respectively. Two groups of press wheels 500 are located above and below the drive gear 200, respectively. In layman's terms, the cooperation of the two tracks 103 and the protrusions 501 can provide stability, and the addition of the two groups of press wheels 500 can provide the double stability to make the saw blade 100 have a better cutting performance, stronger stability and more durability.

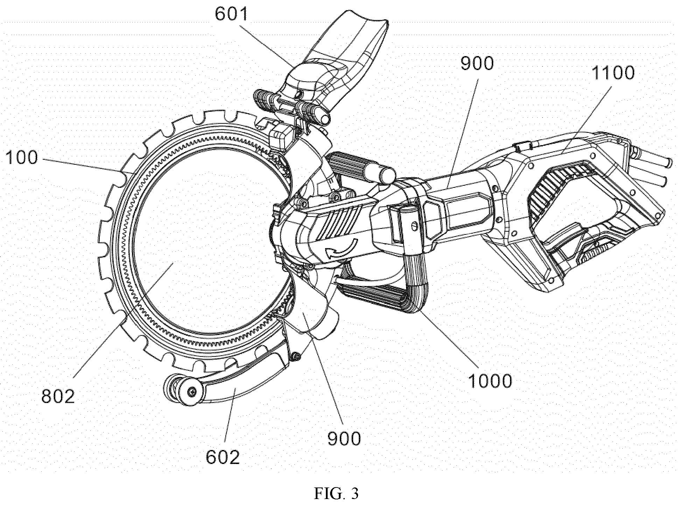

Referring to FIGS. 3-4, the internal gear ring cutting machine of the present embodiment further includes the water baffling component 600, the water outlet component 700 and the water guide component 800. Specifically, the water outlet component 700 is used when the saw blade 100 is cutting. Because the saw blade 100 will heat up while cutting, and dust and debris will be involved, it is necessary to water the saw blade 100. The water outlet component 700 is configured to water the saw blade 100. While dissipating heat, the water can also wash away the generated debris and surrounding dust. However, during this process, the saw blade 100 will throw water on the user at high speed. Therefore, the water baffling component 600 is also provided in the present embodiment for baffling the water in the vertical direction, that is, in the direction of rotation. The water guide component 800 is configured to guide the direction of the water flow so that it can water the saw blade 100 along the edge, and has a certain water-isolating effect in the horizontal direction.

More specifically, the water baffling component 600 is arranged at the side edge of the saw blade 100, and the water baffling component 600 further includes the upper water baffling plate 601 and the lower water baffling plate 602 that are allowed to flip. The upper water baffling plate 601 and the lower water baffling plate 602 can flip by a certain angle in the vertical direction to adapt to the strength of water baffling. When the rotation speed is high, they can flip to a position closer to the saw blade 100, and when the rotation speed is low, they can flip to a position farther from the saw blade 100. The angle is set according to actual needs.

The water outlet component 700 further includes the water outlet 701 and the water outlet pipe 702 that are connected to each other. The water outlet 701 is arranged on a side of the saw blade 100 and is located below the transmission assembly 300. The water outlet 701 is configured to water the saw blade 100, and the water outlet pipe 702 is connected to the external water source. Of course, the output water pressure of the water outlet pipe 702 can also be provided by the external water source. The water guide component 800 includes the water guide plate 801 and the partition 802. The water guide plate 801 and the partition 802 are attached to each other and arranged within the ring of the saw blade 100. A cut-out portion of the water guide plate 801 extending inward along the edge is attached to the partition 802 to cooperatively form the flow guide portion 803. After the water flows out through the water outlet 701, part of the water is guided by the flow guide portion 803 to flow to the saw blade 100 along the direction of flow guiding.

In the present embodiment, the internal gear ring cutting machine further includes the housing 900, the handheld portion 1000 and the handle 1100. It should be noted that the housing 900 is used for the bearing and fixed installation of the saw blade 100, the drive gear 200, the transmission assembly 300, the output assembly 400, the water baffling component 600, the water outlet component 700 and the water guide component 800 in the present embodiment, as well as the installation of other components, circuits and motors involved in the internal gear ring cutting machine. For example, in the present embodiment, a power supply, a switch, a circuit and the like must also be included. Those having ordinary skill in the art can fully refer to the prior art to achieve them, which is not the core of the present embodiment. Therefore, the installation, the rotation of the motor, how to control the motor, how to cut, etc. are non-essential technical features, so they are not described in detail. The handheld portion 1000 and the handle 1100 are also used for stable hand-held operation of the internal gear ring cutting machine during operation.

The cutting method of the internal gear ring cutting machine proposed in the present embodiment is as follows: the output assembly 400 is opened to rotate the output shaft 401 and the second bevel gear 402 synchronously; then the first bevel gear 302 and the second bevel gear 402 cooperate to rotate synchronously; the first bevel gear 302, the transmission shaft 301 and the drive gear 200 rotate synchronously, and the drive gear 200 drives the saw blade 100 to rotate; the water outlet 701 is opened to continuously water the saw blade 100 until the cutting operation is completed and closed.

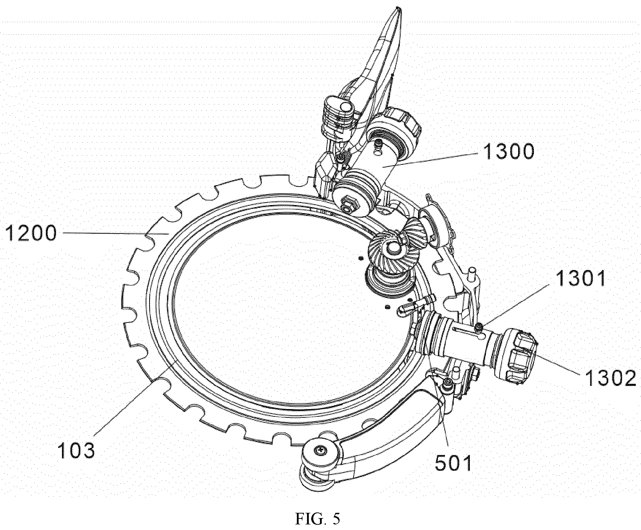

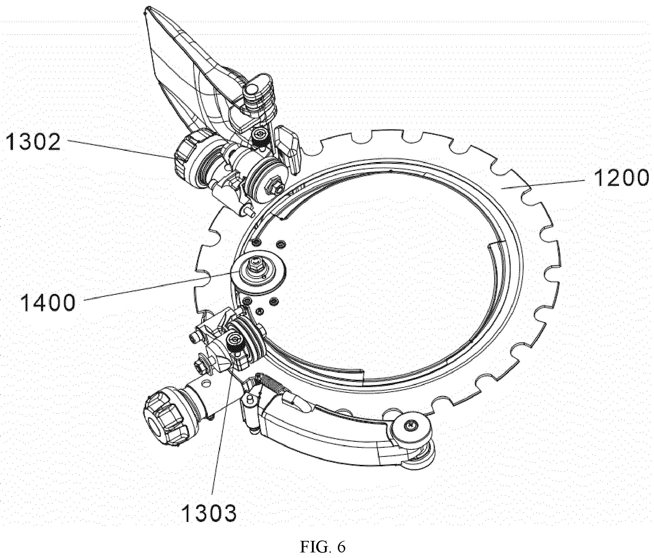

Referring to FIGS. 5-6, the schematic diagrams show the original hard friction mode of the cutting machine, which includes the cutting blade 1200, the adjustment roller 1300 and the friction wheel 1400. The outer edge of the friction wheel 1400 has the concave track, and the inner edge of the cutting blade 1200 has the annular strip protrusions. The annular strip protrusions and the concave track on the friction wheel 1400 contact with each other. Relying on the friction force, when the friction wheel 1400 is driven to rotate, the cutting blade 1200 is driven to rotate. In this case, the annular strip protrusions and the concave track need to be constantly in tight contact and tightly pressed to effectively transmit the rotation. Therefore, under the prior hard friction mode, as the wear increases with time and the number of uses, the adjustment knob 1302 on the original adjustment roller 1300 needs to be constantly adjusted to adjust the position of the cutting blade 1200 along the guide component 1301. Finally, the fine-tuning knob 1303 is required to achieve the best transmission performance.

Because the original cutting machine uses the hard friction mode, it is easy to wear the cutting blade 1200, and the blade needs to be replaced frequently. Moreover, due to the problem of wear, the position distance of the blade needs to be adjusted at any time, and both sides need to be adjusted to the appropriate positions at the same time. Each adjustment brings great inconvenience to the user. Each time, the suitable point needs to be found. If the suitable point cannot be found, the cutting blade 1200 can also rotate, but the cutting effect is very poor. Therefore, it is a necessary step to find the suitable point each time, which is very troublesome to use. If the point of application of force is not adjusted properly during use, it will also change, causing the cutting blade 1200 to suddenly get stuck and not move. However, the internal gear ring cutting machine proposed in the present embodiment overcomes the above defects. The side guide wheel is fixed and does not need to be adjusted after the blade is replaced. Therefore, there is no need to set the guide component 1301, the adjustment knob 1302 and the fine-tuning knob 1303 on the press wheels 500, which improves convenience and efficiency.

It should be noted that the above embodiments are only used to illustrate the technical solution of the present invention rather than to limit the protection scope of the present invention. For those having ordinary skill in the art, other forms of changes or modifications can be made based on the above description and ideas. It is unnecessary and impossible to list all the embodiments here. Any modifications, equivalent substitutions and improvements made within the spirit and principles of the technical solution of the present invention shall fall within the protection scope of the claims of the present invention.

## Claims

1. An internal gear ring cutting machine, **characterized by** comprising:
a saw blade (100), wherein the saw blade (100) is annular and comprises an external gear (101) arranged on an outer edge and an internal gear (102) arranged on an inner edge, and the external gear (101) is configured for cutting;
a drive gear (200), wherein the internal gear (102) is meshed with the drive gear (200);
a transmission assembly, wherein the transmission assembly (300) comprises a transmission shaft (301) and a first bevel gear (302), and the drive gear (200) and the first bevel gear (302) are fixedly arranged at two ends of the transmission shaft (301), respectively; and
an output assembly (400), comprising an output shaft (401) and a second bevel gear (402) that are fixedly connected, wherein the first bevel gear (302) and the second bevel gear (402) are meshed with each other for transmission.

2. The internal gear ring cutting machine according to claim 1, **characterized in that** tracks (103) configured to be annular grooves are provided along two ring sides of the saw blade (100).

3. The internal gear ring cutting machine according to claim 2, **characterized by** comprising press wheels (500), wherein a surface of the press wheel (500) is provided with protrusions (501); two press wheels (500) as a group are fixedly arranged on two sides of the saw blade (100); and the protrusions (501) are pressed into the tracks (103) to roll.

4. The internal gear ring cutting machine according to claim 1, **characterized by** comprising a water baffling component (600) arranged at a side edge of the saw blade (100), wherein the water baffling component (600) comprises an upper water baffling plate (601) and a lower water baffling plate (602) that are allowed to flip.

5. The internal gear ring cutting machine according to claim 1, **characterized by** comprising a water outlet component (700), wherein the water outlet component (700) further comprises a water outlet (701) and a water outlet pipe (702) that are connected to each other; and
the water outlet (701) is arranged on a side of the saw blade (100) and is located below the transmission assembly (300).

6. The internal gear ring cutting machine according to claim 1, **characterized by** comprising a water guide component (800), wherein the water guide component (800) comprises a water guide plate (801) and a partition (802); and
the water guide plate (801) and the partition (802) are attached to each other and arranged within a ring of the saw blade (100); and a cut-out portion of the water guide plate (801) extending inward along an edge is attached to the partition (802) to cooperatively form a flow guide portion (803).

7. The internal gear ring cutting machine according to claim 1, **characterized by** further comprising a housing (900), a handheld portion (1000) and a handle (1100).

8. The internal gear ring cutting machine according to claim 3, **characterized in that** the tracks (103) are two concentric tracks arranged on a side of the saw blade (100).

9. The internal gear ring cutting machine according to claim 3, **characterized in that** the protrusions (501) are two annular strip protrusions arranged at an interval, and has an interval distance corresponding to an interval distance of the two tracks (103), and the two protrusions (501) roll in the two tracks (103), respectively.

10. The internal gear ring cutting machine according to claim 3, **characterized in that** two groups of press wheels (500) are located above and below the drive gear (200), respectively.

## Amended claims

### Amended claims in accordance with Rule 137(2) EPC.

1. An internal gear ring cutting machine, comprising:
a saw blade (100), wherein the saw blade (100) is annular and comprises an external gear (101) arranged on an outer edge and an internal gear (102) arranged on an inner edge, and the external gear (101) is configured for cutting;
a drive gear (200), wherein the internal gear (102) is meshed with the drive gear (200);
a transmission assembly; and
an output assembly (400), comprising an output shaft (401) and a second bevel gear (402) that are fixedly connected;
**characterized in that** the transmission assembly (300) comprises a transmission shaft (301) and a first bevel gear (302), and the drive gear (200) and the first bevel gear (302) are fixedly arranged at two ends of the transmission shaft (301), respectively; wherein the first bevel gear (302) and the second bevel gear (402) are meshed with each other for transmission.

2. The internal gear ring cutting machine according to claim 1, **characterized in that** tracks (103) configured to be annular grooves are provided along two ring sides of the saw blade (100).

3. The internal gear ring cutting machine according to claim 2, **characterized by** comprising press wheels (500), wherein a surface of the press wheel (500) is provided with protrusions (501); two press wheels (500) as a group are fixedly arranged on two sides of the saw blade (100); and the protrusions (501) are pressed into the tracks (103) to roll.

4. The internal gear ring cutting machine according to claim 1, **characterized by** comprising a water baffling component (600) arranged at a side edge of the saw blade (100), wherein the water baffling component (600) comprises an upper water baffling plate (601) and a lower water baffling plate (602) that are allowed to flip.

5. The internal gear ring cutting machine according to claim 1, **characterized by** comprising a water outlet component (700), wherein the water outlet component (700) further comprises a water outlet (701) and a water outlet pipe (702) that are connected to each other; and
the water outlet (701) is arranged on a side of the saw blade (100) and is located below the transmission assembly (300).

6. The internal gear ring cutting machine according to claim 1, **characterized by** comprising a water guide component (800), wherein the water guide component (800) comprises a water guide plate (801) and a partition (802); and
the water guide plate (801) and the partition (802) are attached to each other and arranged within a ring of the saw blade (100); and a cut-out portion of the water guide plate (801) extending inward along an edge is attached to the partition (802) to cooperatively form a flow guide portion (803).

7. The internal gear ring cutting machine according to claim 1, **characterized by** further comprising a housing (900), a handheld portion (1000) and a handle (1100).

8. The internal gear ring cutting machine according to claim 3, **characterized in that** the tracks (103) are two concentric tracks arranged on a side of the saw blade (100).

9. The internal gear ring cutting machine according to claim 3, **characterized in that** the protrusions (501) are two annular strip protrusions arranged at an interval, and has an interval distance corresponding to an interval distance of the two tracks (103), and the two protrusions (501) roll in the two tracks (103), respectively.

10. The internal gear ring cutting machine according to claim 3, **characterized in that** two groups of press wheels (500) are located above and below the drive gear (200), respectively.
